# EUROPEAN PATENT SPECIFICATION

(11) **EP 4 531 186 B1**
(45) Date of publication and mention of the grant of the patent: **02.12.2026**
(21) Application number: 23839886.1
(22) Date of filing: 07.07.2023
(51) Int. Cl.: H01M 50/342, H01M 50/30, H01M 50/105, H01M 50/186, H01M 50/178, H01M 50/211, H01M 50/184

(54) **SECONDARY BATTERY AND SECONDARY BATTERY MODULE INCLUDING THE SAME**
SEKUNDÄRBATTERIE UND SEKUNDÄRBATTERIEMODUL DAMIT
BATTERIE SECONDAIRE ET MODULE DE BATTERIE SECONDAIRE LA COMPRENANT

(30) Priority: 11.07.2022 KR 20220085280; 05.07.2023 KR 20230087159
(43) Date of publication of application: 02.04.2025
(73) Proprietor: LG Energy Solution, Ltd., Seoul 07335 (KR)
(72) Inventor: PARK, Won Kyoung, Daejeon 34122 (KR); LEE, Kyung Min, Daejeon 34122 (KR); OH, Jae Hun, Daejeon 34122 (KR); AN, Hyuk, Daejeon 34122 (KR); KIM, Ki Woong, Daejeon 34122 (KR)
(74) Representative: Plasseraud IP
(86) International application number: PCT/KR2023/009682
(87) International publication number: WO 2024/014793

(56) References cited:
- WO-A1-2009/113634
- JP-A- 2022 002 167
- KR-A- 20090 121 353
- KR-A- 20110 103 079
- KR-A- 20180 013 671
- KR-A- 20180 013 671
- KR-A- 20210 094 394
- US-A1- 2020 111 999

## Description

### TECHNICAL FIELD

The present invention relates to a secondary battery and a secondary battery module including the same, and more particularly, to a secondary battery including an electrode assembly and a battery case accommodating the electrode assembly and a secondary battery module including the same.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one or two to three or four secondary batteries are used in a small mobile device, a battery module in which a plurality of secondary batteries are electrically connected to each other, or a battery pack in which a plurality of battery modules are electrically connected to each other is used due to needs for high power and large capacity in medium and large devices such as the electric vehicles.

Among the currently commercialized secondary batteries, one of the most spotlighted secondary batteries may be lithium secondary batteries, which are capable of being classified into can type, prismatic type, and pouch-type according to their shapes of exterior materials. Among them, the pouch-type secondary batteries are being widely used in medium and large-sized battery modules because of their high energy density and easy stacking.

As demands for secondary battery modules mounted on vehicles increase in recent years, customer's demands for stability are increasing. However, the customers are requiring to increase in energy density of the secondary battery within a limited space of the secondary battery module. In this case, there is a limitation in that risks of safety related to ignition and explosion of the secondary battery also increase together.

The pouch-type secondary battery may have a structure in which an electrode assembly is accommodated in a pouch-type battery case, and edges of the battery case are sealed. However, when the secondary battery is ignited, a temperature of the secondary battery increases, and an electrolyte is evaporated inside the battery case to generate a gas, the gas may be ejected through a weakly sealed portion of the battery case without a certain path.

Here, when the gas is ejected from a position adjacent to an electrode lead, a fatal problem may occur in which a spark causes rapid ignition of the secondary battery. As a result, it is necessary to develop a technology to solve the above problems.

Documents KR 2021 0094394 A and US 2020/111999 A1 relate to secondary battery cells comprising a battery case having a sealing edge that is folded inward to improve gas tightness and reduce encumbrance.

Document KR 2018 0013671 A relates to a secondary battery cell comprising a cell case having a sealed edge that is formed on a corner of the case and folded several times to reduce the occupied space in a rectangular housing.

### DISCLOSURE OF THE INVENTION

### TECHNICAL PROBLEM

The present invention has been invented to solve the above problems, and an object of the present invention is to provide a secondary battery that is capable of minimizing a risk of ignition by inducing a gas within a battery case so that the gas is discharged to a designated position in the event of an emergency situation such as ignition of the secondary battery, and a secondary battery module including the same.

### TECHNICAL SOLUTION

To solve this problem, the invention provides a secondary battery according to claim 1.

The secondary battery according to the invention may present one or more features of dependent claims 2 to 10, in any combination allowed by the claims.

The invention also provides a secondary battery module according to claim 11.

### ADVANTAGEOUS EFFECTS

The present invention may have the effect of minimizing the risk of the ignition by inducting the gas generated inside the battery case so that the gas is discharged to the designated position by providing the exposing part, of which the distal end is exposed to the outside, at the edge of the battery case.

In addition, the present invention may have the effect of preventing the external moisture and foreign substances from being introduced into the battery case while discharging the gas within the battery case by further including the membrane part connected to the exposing part.

In addition, the present invention may have the effect in that, in the secondary battery module including the plurality of secondary batteries, the exposing part, of which the distal end is exposed to the outside, is provided at the edge of the battery case of the secondary battery so that the gas is discharged to the designated position to minimize the risk of the ignition, thereby suppressing and delaying the thermal runaway propagation between the secondary batteries inside the secondary module.

### BRIEF DESCRIPTION OF THE DRAWINGS

FIG. 1 is a front view illustrating a configuration of a secondary battery before an edge of a battery case is folded to manufacture the secondary battery according to Embodiment 1 of the present invention.
FIG. 2 is a front view of the secondary battery according to Embodiment 1 of the present invention.
FIG. 3 is a detailed perspective view of an exposing part in the secondary battery of FIG. 2.
FIG. 4 is a cross-sectional view taken along line A-A in FIG. 2.
FIG. 5 is a cross-sectional view taken along line B-B in FIG. 2 so as to illustrate a state before a gas is discharged through the exposing part.
FIG. 6 is a cross-sectional view illustrating a state in which the gas is discharged through the exposing part of FIG. 5.
FIG. 7 is a perspective view illustrating a state in which the gas is discharged through the exposing part in the secondary battery of FIG. 2.
FIG. 8 is a front view of a secondary battery according to Embodiment 2 of the present invention.
FIG. 9 is a perspective view illustrating a state in which a membrane part is connected to an exposing part in a secondary battery according to Embodiment 3 of the present invention.
FIG. 10 is a cross-sectional view illustrating a state before a gas is discharged through the exposing part in the secondary battery of FIG. 9.
FIG. 11 is a cross-sectional view illustrating a state in which the gas is discharged through the exposing part of FIG. 10.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention that is set in the appended claims.

### Secondary battery

A secondary battery 100 according to an embodiment of the present invention includes an electrode assembly 110 and a battery case 120 in which the electrode assembly 110 is accommodated and of which an edge is sealed. The battery case 120 includes at least one folding part 121, which is folded so that a distal end of a portion of the edge of the battery case 120 is hidden inward, and at least one exposing part 122 through which a distal end of the other portion of the edge of the battery case 120 is exposed outward.

The exposing part 122 is configured so that when an internal pressure of the battery case 120 is higher than a predetermined pressure, the sealing is released so that a gas inside the battery case 120 is discharged.

In the present invention, the electrode assembly 110 may have various structures. For example, the electrode assembly 110 may be provided by sequentially stacking an electrode and a separator. In more detail, the electrode assembly 110 may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator. However, the type of electrode assembly 110 is not limited thereto, and also, it is also possible to be configured as a jelly roll-type electrode assembly.

Note that the electrode assembly 110 is accommodated inside the battery case 120 and is represented by a dotted line in the drawing.

In addition, the battery case 120 in which the electrode assembly 110 is accommodated is configured so that an edge thereof is sealed and may have various structures.

For example, the battery case 120 may be provided as two sheets on upper and lower sides of the electrode assembly 110. In addition, in at least one of the two sheets, a portion of the sheet may be formed concavely to form an empty space so that the electrode assembly 110 is accommodated. An electrolyte together with the electrode assembly 110 may be accommodated in the empty space.

The battery case 120 may have a structure with the sealed edge. This is done for preventing the electrode assembly 110 accommodated in the battery case 120 from being damaged due to exposure to external moisture and air. In this case, the edge of the battery case 120 may be sealed using a method such as thermal fusion. The edge of the battery case 120 may be referred to as a terrace part or a sealing part.

The secondary battery 100 according to the present invention may be provided so that the edge of the battery case 120 is folded to reduce a volume of the secondary battery 100 or improve sealing force of the battery case 120, thereby improving energy density.

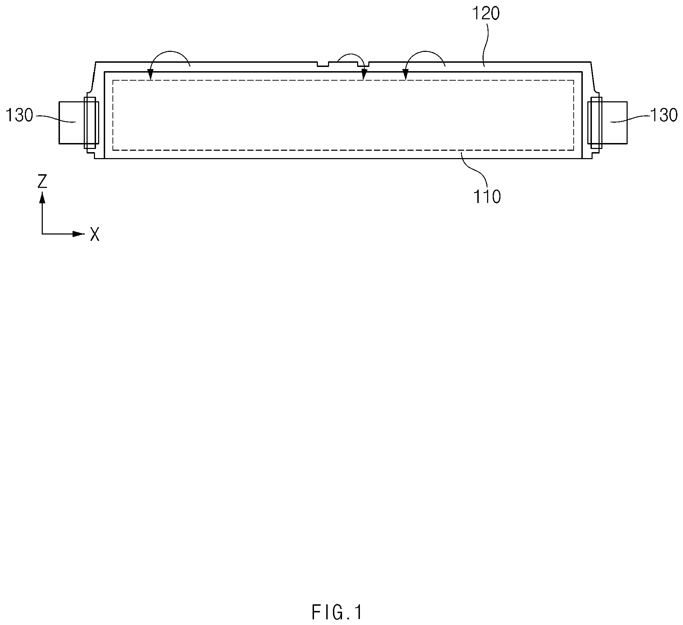

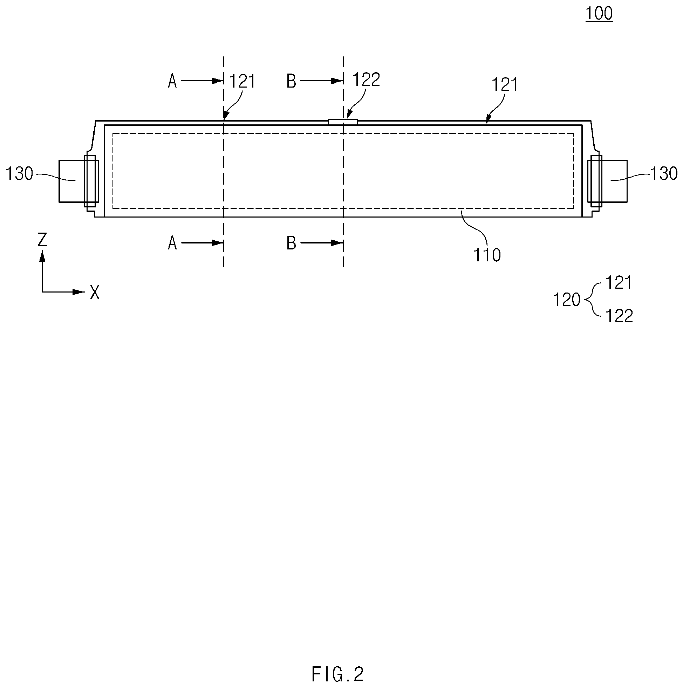

That is, as illustrated in FIG. 1, in the above-described secondary battery 100, the edge of the battery case 120 isfolded in a direction of an arrow in an unfolded state. Thus, as illustrated in FIG. 2, the edge of the battery case 120 may be provided in the folded state.

Here, when a gas is generated in the battery case 120 due to ignition of the secondary battery 100, at least one exposing part 122 and a folding part 121 are provided at the edge of the battery case 120 to discharge the gas to a designated position.

Specifically, as illustrated in FIGS. 2 to 3, the battery case 120 includes at least one folding part 121, which is folded so that a distal end of a portion of the edge of the battery case 120 is hidden inward, and at least one exposing part 122 through which a distal end of the other portion of the edge of the battery case 120 is exposed outward.

Thus, when a predetermined amount of gas is generated inside the battery case 120, the gas may be preferentially discharged from the exposing part 122, which is relatively easier to discharge the gas than the folding part 121. Thus, in the battery case 120 having the above-described structure, a user may discharge the gas to the designated position by selectively disposing the exposing part 122 on the battery case 120 to minimize a risk due to the ignition of the secondary battery 100.

Hereinafter, the structure of the folding part 121 and the exposing part 122 will be described in more detail.

First, the folding part 121 is configured to be folded so that the distal end of the edge of the battery case 120 is hidden inward and may have various structures.

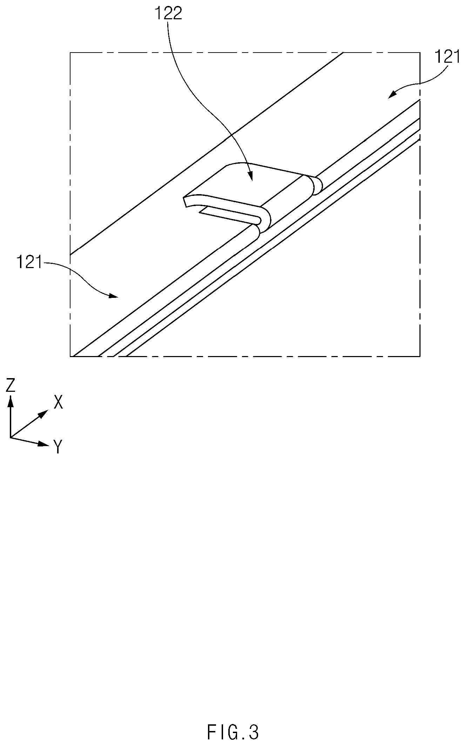

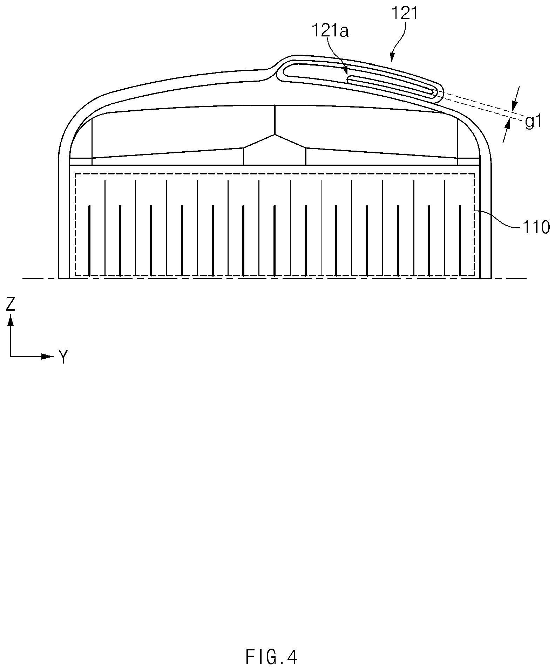

Specifically, the folding part 121 may be provided by folding a portion of the edge of the battery case 120 as illustrated in FIGS. 3 and 4. That is, the distal end of the portion of the edge of the battery case 120 may be a distal end 121a of the folding part 121. The distal end 121a of the folding part 121 may be hidden by inner surfaces of the folding part 121, which face each other.

The folding part 121 may have a structure in which the gas is relatively more difficult to be discharged than the exposing part 122 in which the distal end 122a is exposed to the outside because the distal end 121a, through which the gas is discharged to the outside, is hidden inward and thus may be understood as a configuration that induces the discharge of the gas to the exposing part 122.

In addition, the folding part 121 may have a structure in which the external moisture or air are relatively more difficult to be introduced because the distal end 121a is hidden inward and may be understood as a configuration that improves the sealing force of the battery case 120.

The above-described folding part 121 may have any structure as long as the distal end 121a is hidden inward. For example, the folding part 121 may have a structure that is folded at least twice or more in one direction so that the distal end portion 121a is wrapped inward at the edge of the battery case 120.

In addition, even if the gas is introduced into the folding part 121, the inner surfaces of the folding part 121, which face each other, may be in contact with or be adjacent to each other to prevent the movement of the gas as much as possible.

The present invention includes an exposing part 122 through which the seal is released, and the gas inside the battery case 120 is discharged when an internal pressure of the battery case 120 is higher than a predetermined pressure.

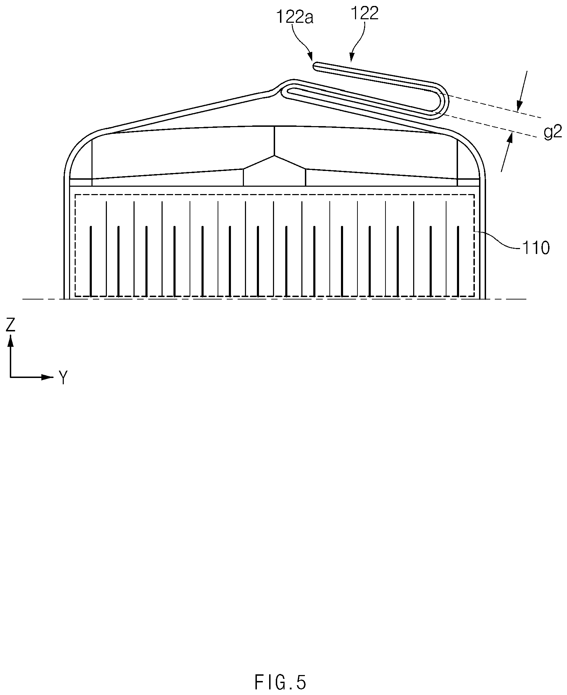

Specifically, the exposing part 122 may be provided by folding a portion of the edge of the battery case 120 as illustrated in FIGS. 3 and 5. That is, the distal end of the other portion of the edge of the battery case 120 may be a distal end 122a of the exposing part 122. The distal end 122a of the exposing part 122 is exposed to the outside.

Thus, the exposing part 122 may have a structure in which the gas is relatively easily discharged when compared to the folding part 121, of which the distal end is hidden inward, because the distal end 122a, through which the gas is discharged to the outside, is exposed to the outside, and thus, the exposing part 122 may be understood as a configuration that operates preferentially rather than the above-described folding part 121 when the gas is generated in the battery case 120 so as to be used a gas discharge passage.

The exposing part 122 may have any structure as long as the distal end 122a is exposed to the outside. For example, the exposing part 122 may have a structure that is folded at least once so that the distal end 122a is exposed to the outside. Here, the exposing part 122 may be folded in a direction opposite to the folding part 121. In addition, the exposing part 122 is folded less times than the folding part 121.

In addition, a gap g2 between inner surfaces facing each other in the exposing part 122 is larger than a gap g1 between the inner surfaces facing each other in the folding part 121. Each of the gaps g1 and g2 may mean an average gap.

As a result, when the internal pressure of the battery case 120 increases, the gas may be discharged more smoothly and preferentially through the exposing part 122.

As illustrated in FIG. 5, this exposing part 122 may be maintained in the sealed state when no gas is generated inside the battery case 120, or when the gas pressure inside the battery case 120 is less than the predetermined pressure.

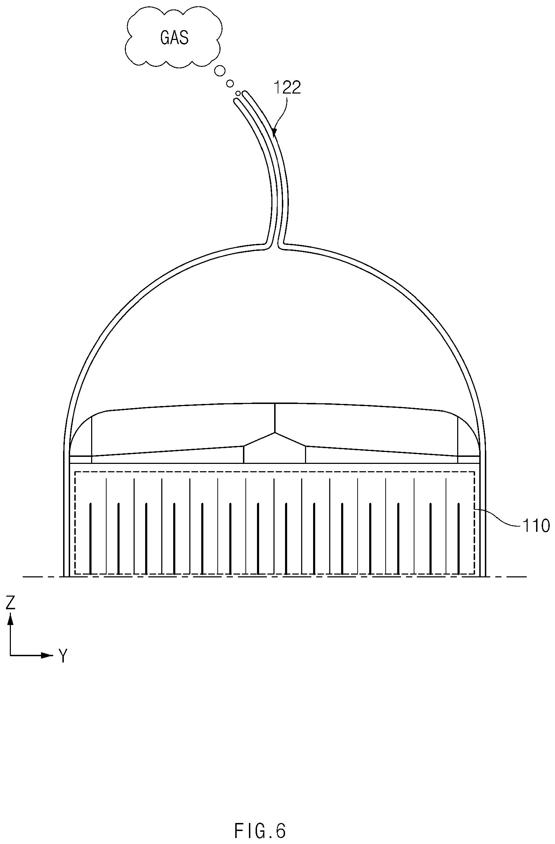

In addition, as illustrated in FIG. 6, even when the gas is generated inside the battery case 120, and the internal pressure of the battery case 120 reaches a predetermined pressure or higher, the sealing of the exposing part 122 may be released to induce the discharge of the gas, and thus, the internal pressure of the battery case 120 may be reduced.

The exposing part 122 may be disposed in various manner in the battery case 120.

However, the secondary battery 100 according to the present invention may further include an electrode lead 130 protruding from at least one end of the battery case 120. In this case, it is preferable that the exposing part 122 is disposed at a position that is far away from the electrode lead 130.

Since the electrode lead 130 is electrically connected to the electrode assembly 110 inside the battery case 120 and the external electric device or secondary battery 100, this is because a spark occurs to cause rapid ignition when the gas discharged from the exposing part 122 is discharged at a position adjacent to the electrode lead 130.

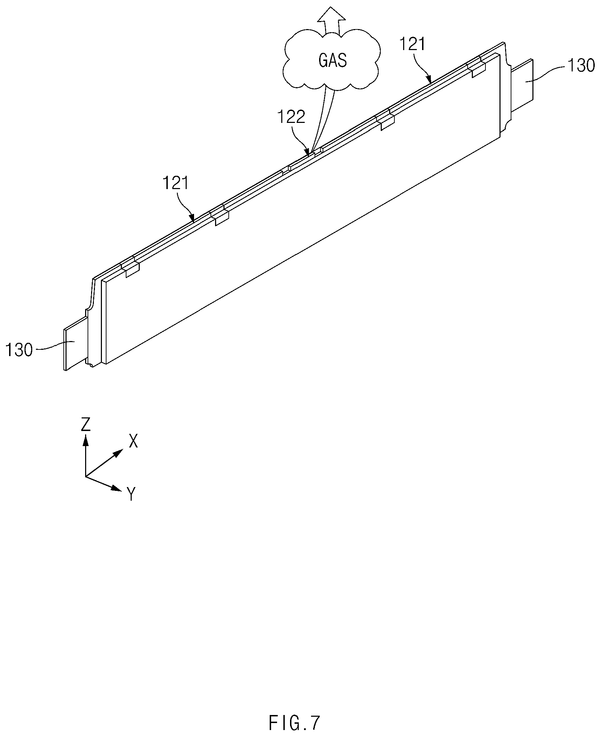

As illustrated in FIGS. 6 and 7, when the electrode lead 130 protrudes from one edge of the battery case 120, the exposing part 122 may be preferably disposed at the other edge of the battery case 120. The folding part 121 may also be disposed at another edge of the battery case 120.

In more detail, the electrode lead 130 may be disposed on a short side of the battery case 120, and the folding part 121 and the exposing part 122 may be disposed on a long side of the battery case 120.

The exposing part 122 may be disposed adjacent to the folding part 121. Preferably, the exposing part 122 may be disposed between the plurality of folding parts 121.

The exposing part 122 described above may be provided in various numbers and positions on the battery case 120 in consideration of the amount of gas generated inside the battery case 120.

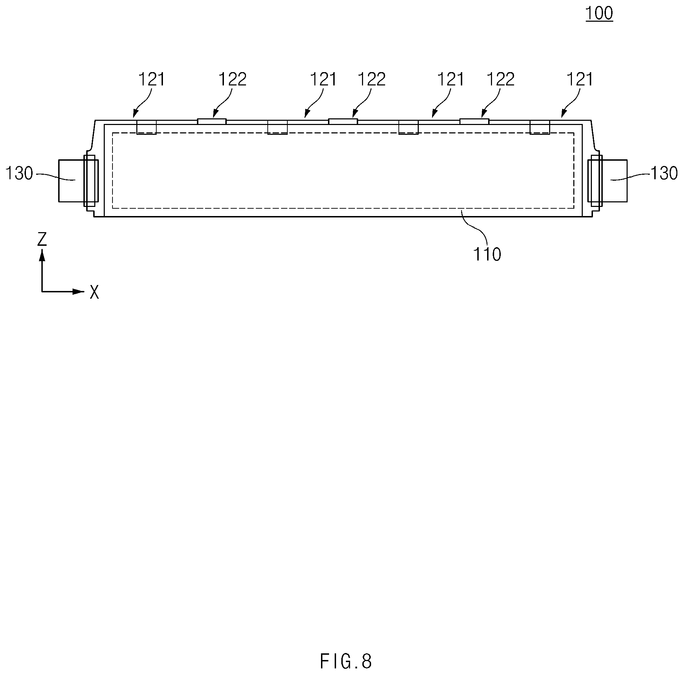

As an example, the exposing part 122 may be provided as one part and disposed at a central portion of the edge of the battery case 120, as illustrated in FIG. 7. As another example, the exposing part 122 may be provided in plurality as illustrated in FIG. 8 and may be provided in plurality spaced apart from each other in the longitudinal direction of the battery case 120 (X direction based on FIG. 8). In this case, the plurality of exposing parts 122 may be alternately disposed with the plurality of folding parts 121.

The secondary battery 100 according to the present invention may further include a membrane part 140 that is folded to surround the distal end 122a of the exposing part 122.

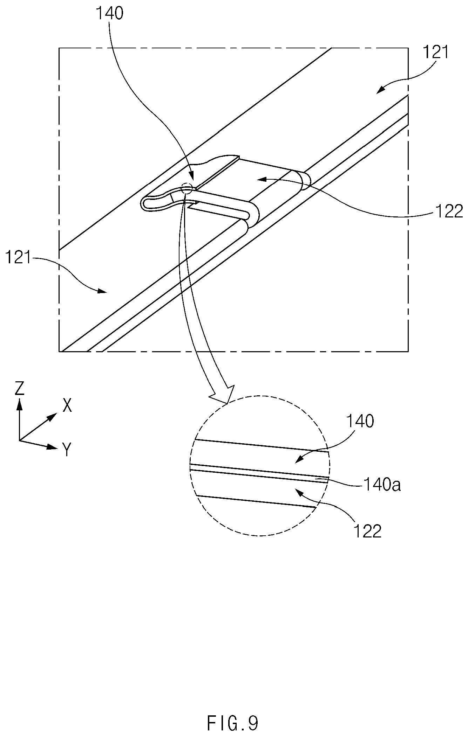

Specifically, as illustrated in FIGS. 9 to 11, the membrane part 140 may be configured so that both ends thereof are connected to the exposing part 122 and folded to surround the distal end 122a of the exposing part 122, and may have various structures.

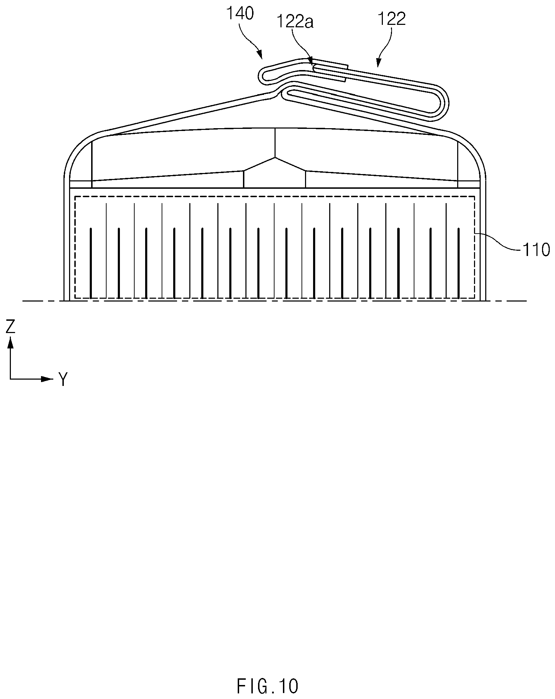

In more detail, as illustrated in FIG. 10, when the exposing part 122 is in a sealed state when the internal pressure of the battery case 120 is less than the predetermined pressure, the membrane part 140 may have a folded structure to surround the distal end of the exposing part 122.

Here, when the exposing part 122 is in the sealed state so that both the ends of the membrane part 140 are maintained to be connected to the exposing part 122 even when the sealing of the exposing part 122 is released, the membrane part 140 may be disposed so that the folded portion of the membrane part 140 is spaced a predetermined distance from the distal end 122a of the exposing part 122.

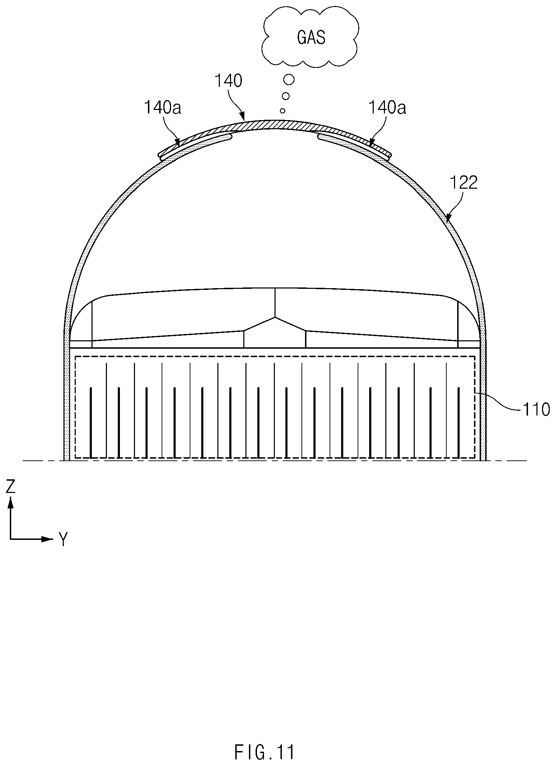

As illustrated in FIG. 11, when the internal pressure of the battery case 120 is higher than the predetermined pressure, and the sealing of the exposing part 122 is released, both the ends of the membrane part 140 may be unfolded in a state of being connected to the outer surface of the exposing part 122.

The membrane part 140 may be made of a porous material. Thus, when the sealing of the exposing part 122 is released, the gas inside the battery case 120 may be discharged to the outside, and simultaneously, the external moisture or foreign substances may be prevented from being introduced into the battery case 120.

In addition, the membrane part 140 may be connected to the exposing part 122 in various manners. For example, as illustrated in FIGS. 10 and 11, the membrane part 140 may be connected to the exposing part 122 by interposing an adhesive material 140a between an inner surface of the membrane part 140 and an outer surface of the exposing part 122. The adhesive material 140a may bond the membrane part 140 to the exposing part 122 through thermal fusion or the like.

### Secondary battery module

A secondary battery module according to an embodiment of the present invention includes: a plurality of secondary batteries 100 arranged in one direction; and a housing accommodating the plurality of the secondary batteries 100. Each of the secondary batteries 100 includes: an electrode assembly 110; and a battery case 120 in which an electrode assembly 110 is accommodated, and an edge thereof is sealed. The battery case 120 includes at least one folding part 121, which is folded so that a distal end of a portion of the edge of the battery case 120 is hidden inward, and at least one exposing part 122 through which a distal end of the other portion of the edge of the battery case 120 is exposed outward.

The exposing part 122 is configured so that when an internal pressure of the battery case 120 is higher than a predetermined pressure, the sealing is released so that a gas inside the battery case 120 is discharged.

Here, the plurality of secondary batteries 100 may be configured to be arranged in one direction in an accommodation space inside the housing and may have various configurations.

More detailed descriptions of the folding part 121 and the exposing part 122 may be replaced with the above-described contents.

The housing may be configured to accommodate the plurality of secondary batteries 100 and may have various configurations.

For example, the housing may have the accommodation space defined therein to accommodate the secondary batteries 100. In addition, a busbar electrically connected to an electrode lead 130 of the secondary battery 100 and a heat sink for discharging heat generated from the secondary battery 100 may be installed in the housing.

## Claims

1. A secondary battery (100) comprising:
an electrode assembly (110); and
a battery case (120) in which the electrode assembly (110) is accommodated and of which an edge is sealed,
wherein the battery case (120) comprises:
at least one folding part (121) folded so that a distal end (121a) of a portion of the edge of the battery case (120) is hidden inward;
**characterized in that** the battery case (120) also comprises:
at least one exposing part (122) through which a distal end (122a) of the other portion of the edge of the battery case (120) is exposed to the outside,
wherein the exposing part (122) is folded at least one time so that the distal end (122a) of the edge is exposed to the outside,
wherein the exposing part (122) is folded less times than the folding part (121),
wherein a gap between inner surfaces of the exposing part (122), which face each other, is greater than that between inner surfaces of the folding part (121), which face each other,
wherein, when an internal pressure of the battery case (120) is equal to or greater than a predetermined pressure, the sealing of the exposing part (122) is released to discharge a gas within the battery case (120).

2. The secondary battery (100) of claim 1, wherein the folding part (121) is folded at least two times in one direction.

3. The secondary battery (100) of claim 1, wherein the exposing part (122) is folded in a direction opposite to the folding part (121).

4. The secondary battery (100) of claim 1, further comprising an electrode lead (130) protruding from one edge of the battery case (120),
wherein the exposing part (122) is disposed on the other edge of the battery case (120).

5. The secondary battery (100) of claim 4, wherein the folding part (121) is disposed on the other edge of the battery case (120).

6. The secondary battery (100) of claim 1, wherein the exposing part (122) is disposed adjacent to the folding part (121).

7. The secondary battery (100) of claim 1, wherein the folding part (121) is provided in plurality and the exposing part (122) is provided in plurality, which are spaced apart from each other in a longitudinal direction of the battery case (120), and
the exposing parts (122) are disposed between the plurality of folding parts (121).

8. The secondary battery (100) of claim 1, further comprising a membrane part (140) folded so that both ends thereof are connected to the exposing part (122) to surround the distal end (122a) of the exposing part (122).

9. The secondary battery (100) of claim 8, wherein, when a pressure inside the battery case (120) increases above a predetermined pressure to release the sealing of the exposing part (122), the membrane part (140) is unfolded in a state in which both ends of the membrane part (140) are connected to an outer surface of the exposing part (122).

10. The secondary battery (100) of claim 8, wherein the membrane part (140) is made of a porous material.

11. A secondary battery module comprising:
a plurality of secondary batteries (100) arranged in one direction; and
a housing configured to accommodate the plurality of secondary batteries (100),
wherein each of the secondary batteries (100) comprises:
an electrode assembly (110); and
a battery case (120) in which the electrode assembly (100) is accommodated and of which an edge is sealed,
wherein the battery case (120) comprises:
at least one folding part (121) folded so that a distal end (121a) of a portion of the edge of the battery case (120) is hidden inward;
**characterized in that** the battery case (120) also comprises:
at least one exposing part (122) through which a distal end (122a) of the other portion of the edge of the battery case (120) is exposed to the outside,
wherein the exposing part (122) is folded at least one time so that the distal end (122a) of the edge is exposed to the outside,
wherein the exposing part (122) is folded less times than the folding part (121),
wherein a gap between inner surfaces of the exposing part (122), which face each other, is greater than that between inner surfaces of the folding part (121), which face each other,
wherein, when an internal pressure of the battery case (120) is equal to or greater than a predetermined pressure, the sealing of the exposing part (122) is released to discharge a gas within the battery case (120).

## Patentansprüche

1. Sekundärbatterie (100), umfassend:
eine Elektrodenanordnung (110); und
ein Batteriegehäuse (120), in dem die Elektrodenanordnung (110) aufgenommen ist und von dem ein Rand versiegelt ist,
wobei das Batteriegehäuse (120) umfasst:
mindestens einen Faltteil (121), der so gefaltet ist, dass ein distales Ende (121a) eines Abschnitts des Rands des Batteriegehäuses (120) nach innen verborgen ist;
**dadurch gekennzeichnet, dass** das Batteriegehäuse (120) ferner umfasst:
mindestens einen Freilegungsteil (122), durch den ein distales Ende (122a) des anderen Abschnitts des Rands des Batteriegehäuses (120) nach außen freigelegt ist,
wobei der Freilegungsteil (122) mindestens einmal so gefaltet ist, dass das distale Ende (122a) des Rands nach außen freigelegt ist,
wobei der Freilegungsteil (122) weniger Male gefaltet ist als der Faltteil (121),
wobei ein Spalt zwischen Innenflächen des Freilegungsteils (122), die einander zugewandt sind, größer ist als derjenige zwischen Innenflächen des Faltteils (121), die einander zugewandt sind,
wobei, wenn ein Innendruck des Batteriegehäuses (120) gleich einem oder größer als ein vorbestimmter Druck ist, die Versiegelung des Freilegungsteils (122) gelöst wird, um ein Gas innerhalb des Batteriegehäuses (120) abzuführen.

2. Sekundärbatterie (100) nach Anspruch 1, wobei der Faltteil (121) mindestens zweimal in einer Richtung gefaltet ist.

3. Sekundärbatterie (100) nach Anspruch 1, wobei der Freilegungsteil (122) in einer dem Faltteil (121) entgegengesetzten Richtung gefaltet ist.

4. Sekundärbatterie (100) nach Anspruch 1, ferner umfassend einen Elektrodenleiter (130), der von einem Rand des Batteriegehäuses (120) vorsteht,
wobei der Freilegungsteil (122) an dem anderen Rand des Batteriegehäuses (120) angeordnet ist.

5. Sekundärbatterie (100) nach Anspruch 4, wobei der Faltteil (121) an dem anderen Rand des Batteriegehäuses (120) angeordnet ist.

6. Sekundärbatterie (100) nach Anspruch 1, wobei der Freilegungsteil (122) benachbart zu dem Faltteil (121) angeordnet ist.

7. Sekundärbatterie (100) nach Anspruch 1, wobei der Faltteil (121) in Vielzahl vorgesehen ist und der Freilegungsteil (122) in Vielzahl vorgesehen ist, die voneinander in einer Längsrichtung des Batteriegehäuses (120) beabstandet sind, und
die Freilegungsteile (122) zwischen der Vielzahl von Faltteilen (121) angeordnet sind.

8. Sekundärbatterie (100) nach Anspruch 1, ferner umfassend einen Membranteil (140), der so gefaltet ist, dass seine beiden Enden mit dem Freilegungsteil (122) verbunden sind, um das distale Ende (122a) des Freilegungsteils (122) zu umgeben.

9. Sekundärbatterie (100) nach Anspruch 8, wobei, wenn ein Druck innerhalb des Batteriegehäuses (120) über einen vorbestimmten Druck ansteigt, um die Versiegelung des Freilegungsteils (122) zu lösen, der Membranteil (140) in einem Zustand entfaltet wird, in dem beide Enden des Membranteils (140) mit einer Außenfläche des Freilegungsteils (122) verbunden sind.

10. Sekundärbatterie (100) nach Anspruch 8, wobei der Membranteil (140) aus einem porösen Material hergestellt ist.

11. Sekundärbatteriemodul, umfassend:
eine Vielzahl von Sekundärbatterien (100), die in einer Richtung angeordnet sind; und
ein Gehäuse, das dafür konfiguriert ist, die Vielzahl von Sekundärbatterien (100) aufzunehmen,
wobei jede der Sekundärbatterien (100) umfasst:
eine Elektrodenanordnung (110); und
ein Batteriegehäuse (120), in dem die Elektrodenanordnung (100) aufgenommen ist und von dem ein Rand versiegelt ist,
wobei das Batteriegehäuse (120) umfasst:
mindestens einen Faltteil (121), der so gefaltet ist, dass ein distales Ende (121a) eines Abschnitts des Rands des Batteriegehäuses (120) nach innen verborgen ist;
**dadurch gekennzeichnet, dass** das Batteriegehäuse (120) ferner umfasst:
mindestens einen Freilegungsteil (122), durch den ein distales Ende (122a) des anderen Abschnitts des Rands des Batteriegehäuses (120) nach außen freigelegt ist,
wobei der Freilegungsteil (122) mindestens einmal so gefaltet ist, dass das distale Ende (122a) des Rands nach außen freigelegt ist,
wobei der Freilegungsteil (122) weniger Male gefaltet ist als der Faltteil (121),
wobei ein Spalt zwischen Innenflächen des Freilegungsteils (122), die einander zugewandt sind, größer ist als derjenige zwischen Innenflächen des Faltteils (121), die einander zugewandt sind,
wobei, wenn ein Innendruck des Batteriegehäuses (120) gleich einem oder größer als ein vorbestimmter Druck ist, die Versiegelung des Freilegungsteils (122) gelöst wird, um ein Gas innerhalb des Batteriegehäuses (120) abzuführen.

## Revendications

1. Batterie secondaire (100) comprenant :
un ensemble d'électrodes (110) ; et
un boîtier de batterie (120) dans lequel l'ensemble d'électrodes (110) est logé et dont un bord est scellé,
dans laquelle le boîtier de batterie (120) comprend :
au moins une partie de pliage (121) pliée de sorte qu'une extrémité distale (121a) d'une portion du bord du boîtier de batterie (120) soit dissimulée vers l'intérieur ;
**caractérisée en ce que** le boîtier de batterie (120) comprend également :
au moins une partie d'exposition (122) à travers laquelle une extrémité distale (122a) de l'autre portion du bord du boîtier de batterie (120) est exposée à l'extérieur,
dans laquelle la partie d'exposition (122) est pliée au moins une fois de sorte que l'extrémité distale (122a) du bord soit exposée à l'extérieur,
dans laquelle la partie d'exposition (122) est pliée moins de fois que la partie de pliage (121),
dans laquelle un espace entre des surfaces internes de la partie d'exposition (122), qui se font face, est supérieur à celui entre des surfaces internes de la partie de pliage (121), qui se font face,
dans laquelle, lorsqu'une pression interne du boîtier de batterie (120) est égale ou supérieure à une pression prédéterminée, le scellement de la partie d'exposition (122) est libéré pour évacuer un gaz à l'intérieur du boîtier de batterie (120).

2. Batterie secondaire (100) selon la revendication 1, dans laquelle la partie de pliage (121) est pliée au moins deux fois dans une direction.

3. Batterie secondaire (100) selon la revendication 1, dans laquelle la partie d'exposition (122) est pliée dans une direction opposée à la partie de pliage (121).

4. Batterie secondaire (100) selon la revendication 1, comprenant en outre un conducteur d'électrode (130) faisant saillie depuis un bord du boîtier de batterie (120),
dans laquelle la partie d'exposition (122) est disposée sur l'autre bord du boîtier de batterie (120).

5. Batterie secondaire (100) selon la revendication 4, dans laquelle la partie de pliage (121) est disposée sur l'autre bord du boîtier de batterie (120).

6. Batterie secondaire (100) selon la revendication 1, dans laquelle la partie d'exposition (122) est disposée de manière adjacente à la partie de pliage (121).

7. Batterie secondaire (100) selon la revendication 1, dans laquelle la partie de pliage (121) est prévue en pluralité et la partie d'exposition (122) est prévue en pluralité, lesquelles sont espacées les unes des autres dans une direction longitudinale du boîtier de batterie (120), et
les parties d'exposition (122) sont disposées entre la pluralité de parties de pliage (121).

8. Batterie secondaire (100) selon la revendication 1, comprenant en outre une partie de membrane (140) pliée de sorte que ses deux extrémités soient connectées à la partie d'exposition (122) pour entourer l'extrémité distale (122a) de la partie d'exposition (122).

9. Batterie secondaire (100) selon la revendication 8, dans laquelle, lorsqu'une pression à l'intérieur du boîtier de batterie (120) augmente au-dessus d'une pression prédéterminée pour libérer le scellement de la partie d'exposition (122), la partie de membrane (140) est dépliée dans un état dans lequel les deux extrémités de la partie de membrane (140) sont connectées à une surface externe de la partie d'exposition (122).

10. Batterie secondaire (100) selon la revendication 8, dans laquelle la partie de membrane (140) est constituée d'un matériau poreux.

11. Module de batterie secondaire comprenant :
une pluralité de batteries secondaires (100) disposées dans une direction ; et
un logement configuré pour accueillir la pluralité de batteries secondaires (100),
dans lequel chacune des batteries secondaires (100) comprend :
un ensemble d'électrodes (110) ; et
un boîtier de batterie (120) dans lequel l'ensemble d'électrodes (100) est logé et dont un bord est scellé,
dans lequel le boîtier de batterie (120) comprend :
au moins une partie de pliage (121) pliée de sorte qu'une extrémité distale (121a) d'une portion du bord du boîtier de batterie (120) soit dissimulée vers l'intérieur ;
**caractérisé en ce que** le boîtier de batterie (120) comprend également :
au moins une partie d'exposition (122) à travers laquelle une extrémité distale (122a) de l'autre portion du bord du boîtier de batterie (120) est exposée à l'extérieur,
dans lequel la partie d'exposition (122) est pliée au moins une fois de sorte que l'extrémité distale (122a) du bord soit exposée à l'extérieur,
dans lequel la partie d'exposition (122) est pliée moins de fois que la partie de pliage (121),
dans lequel un espace entre des surfaces internes de la partie d'exposition (122), qui se font face, est supérieur à celui entre des surfaces internes de la partie de pliage (121), qui se font face,
dans lequel, lorsqu'une pression interne du boîtier de batterie (120) est égale ou supérieure à une pression prédéterminée, le scellement de la partie d'exposition (122) est libéré pour évacuer un gaz à l'intérieur du boîtier de batterie (120).
